**Europäisches Patentamt**

(19) **European Patent Office**

**Office européen des brevets**

(11) Veröffentlichungsnummer: **0 047 910**
**B1**

(12) **EUROPÄISCHE PATENTSCHRIFT**

(45) Veröffentlichungstag der Patentschrift:
05.12.84

(51) Int. Cl.³: **C 08 G 12/12,** C 08 G 12/32,
C 08 G 12/46, C 08 G 14/14

(21) Anmeldenummer: **81106786.7**

(22) Anmeldetag: **31.08.81**

(54) Verfahren zur Herstellung von Aminoplastharzlösungen.

(30) Priorität: **11.09.80 DE 3034172**

(43) Veröffentlichungstag der Anmeldung:
**24.03.82 Patentblatt 82/12**

(45) Bekanntmachung des Hinweises auf die Patenterteilung:
**05.12.84 Patentblatt 84/49**

(84) Benannte Vertragsstaaten:
**AT BE CH DE FR IT LI SE**

(56) Entgegenhaltungen:
**CH - A - 493 685**
**GB - A - 820 930**
**US - A - 3 703 563**
**US - A - 3 790 529**
**US - A - 4 107 119**
**US - A - 4 198 332**

(73) Patentinhaber: **BASF Aktiengesellschaft,**
**Carl-Bosch-Strasse 38, D-6700 Ludwigshafen (DE)**

(72) Erfinder: **Duda, Ulrich Michael, Dr.,**
**Max-Slevogt-Strasse 13A, D-6710 Frankenthal (DE)**
Erfinder: **Lelgemann, Ludwig, Amsterdamer Strasse 16,**
**D-6700 Ludwigshafen (DE)**
Erfinder: **Merkel, Dieter, Dr., Waltershoehe 7,**
**D-6701 Friedelsheim (DE)**
Erfinder: **Petersen, Harro, Dr., Kalmitstrasse 23,**
**D-6710 Frankenthal (DE)**
Erfinder: **Weiss, Wolfram, Dr., Am Speyerweg 40,**
**D-6704 Mutterstadt (DE)**
Erfinder: **Wendel, Kurt, Dr., Beethovenstrasse 8,**
**D-6700 Ludwigshafen (DE)**
Erfinder: **Wistuba, Eckehardt, Dr., Im Obergarten 7,**
**D-6702 Bad Duerkheim (DE)**
Erfinder: **Lehmann, Gerhard J. Dr., Neuwiesenstrasse 4,**
**D-6700 Ludwigshafen (DE)**
Erfinder: **Wittmann, Otto, Max-Beckmann-Strasse 13B,**
**D-6710 Frankenthal (DE)**

**Beschreibung**

Aminoplastharze, also Harnstoff-Formaldehyd-Kondensate, Melamin-Formaldehyd-Harze sowie Melamin-Harnstoff-Formaldehyd- und Melamin-Harnstoff-Phenol-Formaldehyd-Mischkondensate werden in Form ihrer wässrigen Lösungen in grossem Umfang, z.B. als Bindemittel zur Herstellung von Holzwerkstoffen und zur Beschichtung in Form sog. Tränkharze verwendet. Die Harzlösungen stellen kolloidale Systeme unterschiedlich hohen Kondensationsgrades dar. Im allgemeinen weisen die Harze nur eine beschränkte Mischbarkeit mit Wasser auf; übliche wässrige, 50 bis 65%ige Harzlösungen lassen sich im allgemeinen mit Wasser bei Raumtemperatur höchstens im Verhältnis von etwa 1:0,5 bis 1:2 ohne Entmischung verdünnen. Beim weiteren Verdünnen mit Wasser, d.h. also besonders bei der Reinigung benutzter Gefässe treten insbesondere bei den Mischkondensationsprodukten (d.h. Kondensaten, die ausser Formaldehyd und z.B. Harnstoff noch andere Aminoplast- bzw. Phenoplastbildner enthalten) stark klebrige, klumpende Ausfällungen auf. Diese haften an den Apparatewandungen und Rohrleitungen und erschweren deren Reinigung.

Die Aufgabe, Harze herzustellen, die beim Verdünnen mit Wasser gewissermassen emulgieren bzw. eine disperse Phase in Wasser bilden (in der Fachsprache ausgedrückt, eine bessere «Waschbarkeit» besitzen), ist anscheinend noch nicht gestellt und daher auch noch nicht gelöst worden.

Die Erfindung löst die Aufgabe, waschbare wässrige Harze herzustellen, bei denen also beim Verdünnen mit Wasser keine klebrigen Produkte auftreten. Die technologischen Eigenschaften der damit hergestellten Werkstoffe werden im Vergleich zu herkömmlichen Harzen nicht nachteilig beeinflusst. Ausserdem weisen die Harzlösungen eine besonders hohe Lagerstabilität auf.

Es wurde gefunden, dass man durch Mitverwendung geringer Mengen, z.B. 0,1 bis 3 Gew.% eines gegebenenfalls methylolierten Poly(meth)acrylamids oder eines gegebenenfalls methylolierten Acrylamid-Mischpolymerisats, in welchem das (Meth)acrylamid die Polymereigenschaften bestimmt, bei der Herstellung eines Aminoplastharzes Produkte erhält, die beim Verdünnen mit Wasser feindisperse, nicht klebende Ausfällungen bilden. Derart modifizierte Harze bereiten beim Reinigen der Anlagen und Rohrleitungen keine Schwierigkeiten. Ein Zusatz von mehr als 5 Gew.% ist zwar technisch möglich, bringt jedoch keine Verbesserung mehr.

Gegenstand der Erfindung ist daher ein Verfahren zur Herstellung von wässrigen Lösungen von Aminoplastharzen durch Kondensation von Harnstoff und/oder Melamin und gegebenenfalls Phenol mit Formaldehyd in einer oder mehreren Stufen, wobei schliesslich beschränkt wasserverträgliche Harze gebildet werden. Das Verfahren ist dadurch gekennzeichnet, dass man vor oder während der Kondensation, jedenfalls aber, solange noch freier Harnstoff bzw. Melamin oder deren Vorkondensate anwesend sind, ein wasserlösliches, mehr als 30 Mol% einpolymerisierte Einheiten des Acrylamids, Methacrylamids oder deren N-Methylolverbindungen enthaltendes Polymerisat mit einem K-Wert von etwa 20 bis 60 bzw. einem gewichtsgemittelten Molekulargewicht $M_w$ von etwa 5000 bis 50 000 in einer Menge von unter 5 Gew.%, bezogen auf die in der Lösung gebildete Harzmenge zusetzt.

Geeignete Acrylamid-Polymere, d.h. Polyacrylamide und vergleichbare Mischpolymerisate lassen sich in bekannter Weise durch Polymerisation von Acrylamid, Methacrylamid sowie der N-Methylol- bzw. N-Alkoxymethyl- (d.h. N-Methyläther-)-verbindungen des Acryl- und Methacrylamids gegebenenfalls zusammen mit entsprechenden Mengen an anderen olefinisch ungesättigten polymerisierbaren Verbindungen (Copolymerisation) herstellen.

Bei den Polymeren handelt es sich also um wasserlöslich bzw. wasserdispergierbare Homopolymerisate von Methacrylamid bzw. Acrylamid bzw. Copolymerisate von Methacrylamid bzw. Acrylamid mit höchstens 70 Mol% anderer Monomerer, z.B. Acrylestern zweiwertiger Alkohole wie Hydroxyäthylacrylat, Hydroxypropylacrylat, Hydroxybutylacrylat, Acrylnitril, (Meth)acrylsäureestern mit einwertigen $C_{1-4}$-Alkoholen usw. Die einpolymerisierten Einheiten des (Meth)acrylamids können mittels Formaldehyd ganz oder teilweise in die N-Methylolverbindungen und diese wiederum in Alkyläther umgewandelt sein. Der Acrylamid-Anteil der Polymeren soll diesen für die Verwendung bei der vorliegenden Erfindung ausreichende Wasserlöslichkeit vermitteln; jedoch tragen auch z.B. Acrylester zweiwertiger Alkohole hierzu bei.

Die K-Werte geeigneter Polymerisate, gemessen in 0,5%iger wässriger Lösung, liegen zwischen etwa 20 und 60, vorzugsweise zwischen 30 und 40. Es kann angenommen werden, dass das – gewichtsgemittelte – Molekulargewicht $M_w$ solcher Polymerer etwa 5000 bis 50 000 beträgt. Zur Einstellung der K-Werte, die ein Mass für das Molekulargewicht der Polymeren darstellen, werden die fachüblichen Massnahmen ergriffen, die allgemein bekannt sind (Zum K-Wert vgl. DIN 53726).

Aminoplastharze auf der Grundlage von Kondensaten des Harnstoffs und/oder Melamins und gegebenenfalls Phenols mit Formaldehyd und deren Herstellung sind seit langem bekannt.

Sie weisen im allgemeinen ein Molverhältnis von Formaldehyd zu den übrigen Kondensationsteilnehmern von 1,2 bis 1,6:1 auf; abweichende Molverhältnisse sind möglich und mehrfach beschrieben.

Die Kondensation wird, wie allgemein bekannt, bei ausschliesslicher oder überwiegender Verwendung von Harnstoff im allgemeinen so geführt, dass zunächst eine durch Zugabe von Formaldehyd ablaufende Methylolierungsreaktion im schwach alkalischen Bereich des wässrigen Reaktionsgemisches abgewartet und danach eine Polykondensation in schwach saurer oder, bei Verwendung von Melamin oder Phenol, auch alkalischer Umgebung vorgenommen wird. Die Verschiebung des pH-Werts ins Saure während der Reaktion stellt sich, falls sie nicht willkürlich veranlasst wird, auch von selbst ein, da aus Formaldehyd in einer Nebenreaktion Ameisensäure gebildet wird. Die in Frage kommenden pH-Bereiche liegen bei 7,5 bis 9,5 bzw. bei 4,5 bis 6,5.

Es ist auch möglch, anstelle der niedermolekularen Produkte einer Methylolierungsreaktion die formaldehydreichen (Molverhältnis 2,5:1 bis 5:1) Anlagerungsprodukte von Formaldehyd an Harnstoff als Ausgangsprodukte zu verwenden, wie sie bei der Absorption von gasförmigem Formaldehyd zu wässrigen Harnstofflösungen auftreten und anstelle konzentrierter Formaldehydlösungen handelsüblich sind. Herstellung und Verwendung dieser Anlagerungsprodukte sind allgemein bekannt.

Die Herstellung der Harze nach dem erfindungsgemässen Verfahren erfolgt vorzugsweise in wenigstens zwei Stufen, wenn Harnstoff an der Umsetzung beteiligt ist.

In der 1. Stufe stellt man ein Vorkondensat durch Umsetzung von Harnstoff und gegebenenfalls Melamin und gegebenenfalls Phenol mit Formaldehyd und den vorgenannten Acrylamid-Polymeren bei etwa 80 bis 100°C her, wobei die gesamte Vorkondensationsphase oder ein Teil in Gegenwart des Acrylamid-Polymeren stattfindet.

Es besteht – was die Erfindung aber in keiner Weise begrenzen soll – die Vorstellung, dass dabei zwischen dem Formaldehyd-Kondensat und dem Polymeren eine Umsetzung stattfindet.

Die Vorkondensate werden in einer 2. Stufe mit ebenfalls Harnstoff, gegebenenfalls Melamin, gegebenenfalls auch mit Harnstoff-Formaldehyd-, Melamin-Formaldehyd- oder Mischkondensationsprodukten, wie beispielsweise Harnstoff-Melamin-Formaldehyd- oder Melamin-Phenol-Formaldehyd- oder Harnstoff-Melamin-Formaldehyd-Umsetzungsprodukten abgemischt und einer Nachreaktion bis zur begrenzten Wasserverdünnbarkeit unterworfen.

Bei ausschliesslicher oder überwiegender Verwendung von Melamin und gegebenenfalls Phenol wird die Kondensation im alkalischen Bereich, oberhalb von etwa pH 8 vorgenommen; hierzu ist z.B. auf die DE-AS 20 20 481 oder die DE-OS 2 460 994 zu verweisen.

Harze, die im wesentlichen auf Melamin aufgebaut sind, vorwiegend also Harze, die als Tränkharze Verwendung finden sollen, werden gewöhnlich einstufig bei etwa 80 bis 100°C kondensiert. In beiden Fällen ist eine Erhöhung der Reaktionstemperatur durch Anwendung geringen Überdrucks möglich.

Bevorzugt wird die Erfindung auf die Harze angewandt, die Melamin, gegebenenfalls Harnstoff und Phenol enthalten, wie sie z.B. in der DE-OS 2 020 481 beschrieben sind.

Zur Abgrenzung der Erfindung von dem, was bereits bekannt ist, ist das folgende zu sagen:

Der Zusatz von Acrylpolymeren zu Aminoplastharzen bzw. umgekehrt ist an sich bekannt: Beispielsweise werden Lackharze für Einbrennlakkierungen auf Acrylester-Basis mit geeigneten Melamin-Harzen verschnitten. Die Acrylesterharze enthalten als kondensationsfähige Bestandteile untergeordnete Mengen an einpolymerisierten Einheiten z.B. des Acrylamids. Die unterschiedlichen Lackbestandteile werden hier im allgemeinen in vergleichbaren Mengen verwendet und die Aminoplast-Bestandteile sind gewöhnlich vollständig veräthert.

In der FR-PS 1 275 165 ist die Tränkung von Papieren o.ä. mit einer Mischung beschrieben, die aus einer Copolymerisat-Dispersion einerseits und einer wässrigen Melaminharzlösung andererseits besteht. Dabei wird das Melaminharz in untergeordneten Mengen verwendet, während das Polymersat 3 bis 7% Acrylamid einpolymerisiert enthalten kann. Ähnliches beschreibt auch die DE-AS 2 135 072, während nach der DE-OS 2 049 378 die Mitverwendung untergeordneter Mengen an monomerem N-Methylolacrylamid von Vorteil ist.

Auch wässrige Aminoplast-Tränkharze auf der Grundlage von Melamin sind schon mit geringen Mengen von Acrylester-Polymeren versetzt worden; wie in der DE-OS 2 460 994 angegeben ist, kann dabei der Zusatz der entsprechend wasserlöslichen Polymeren schon während der Kondensationsreaktion erfolgen. Die in der genannten DE-OS verwendeten Acrylester-Polymeren enthalten aber Acrylamid nur in allenfalls untergeordneten Mengen und erfüllen eine andere Aufgabe als die erfindungsgemässen Polymeren. Der Zusatz der Polymeren hat dort nämlich eine andere Wirkung insofern, als er die Viskosität der Tränkharze erniedrigen und damit ihre Tränkwirkung erhöhen soll. Eine Verbesserung der Waschbarkeit i.S. der Erfindung kann mit den in der DE-OS beschriebenen Polymeren nicht erzielt werden.

Die im nachstehenden experimentellen Teil verwendeten Mengen- und Konzentrationsangaben beziehen sich auf das Gewicht.

A) Herstellung eines hydroxymethylierten Polyacrylamids:

1365 Teile einer 31%igen wässrigen Lösung von Polyacrylamid eines mittleren Molekulargewichts $M_w$ von etwa 10 000 werden in einer Rührapparatur mit 450 Teilen 40%iger Formaldehydlösung unter Zusatz von 20 Teilen 50%iger Natronlauge 10 Stunden bei 20 bis 25°C umgesetzt. Anschliessend wird mit 50%iger Schwefelsäure neutralisiert. Die erhaltene Lösung weist einen Feststoffgehalt von 34% auf. Der Gehalt an freiem Formaldehyd beträgt 0,9% und der Gesamtgehalt an Formaldehyd beträgt 9,1%.

B) Beispiele für die Herstellung waschbarer Leimharze

Beispiel 1

Herstellung eines Polyacrylamid modifizierten Harnstoff-Formaldehyd-(HF)-Harzes:

10 000 Teile eines handelsüblichen wässrigen Harnstoff-Formaldehyd-Vorkondensates mit 50% Formaldehydgehalt und einem Molverhältnis (F:H) von 4 werden mit 5 Teilen Polyacrylamid vom K-Wert 32 bei pH 6 für 10 Minuten auf 80°C erwärmt. Danach werden 266 Teile wässrige, 68%ige Harnstoff-Lösung zugesetzt und bei pH 5 und 95°C belassen, bis die Lösung eine Viskosität von 80 bis 100 mPas aufweist. Danach wird ein pH-Wert von 7 eingestellt und 175 Teile 68%ige Harnstoff-Lösung zugefügt. Die erhaltene Lösung wird durch Abdestillieren von 300 Teilen Wasser unter vermindertem Druck auf handelsübliche Konzentration (65%) eingeengt.

Beispiel 2

Herstellung eines mit hydroxymethyliertem Polyacrylamid modifizerten HF-Harzes:
1000 Teile des vorstehend erwähnten wässrigen Harnstoff-Formaldehyd-Vorkondensats mit 50% Formaldehydgehalt (Molverhältnis F:H=4) werden mit 22 Teilen der unter A) beschriebenen wässrigen Lösung von hydroxymethyliertem Polyacrylamid bei pH 6 auf 80°C erwärmt und für 10 Minuten bei dieser Temperatur belassen. Danach werden 266 Teile wässrige 68%ige Harnstoff-Lösung zugesetzt und bei pH 5 auf 95°C erwärmt, bis die Lösung eine Viskosität von 80 bis 100 mPa.s aufweist. Danach werden bei pH 7 weitere 175 Teile 68%ige Harnstoff-Lösung zugefügt und die erhaltene Lösung durch Abdestillieren von 300 Teilen Wasser auf handelsübliche Konzentration (65%) eingeengt.

Beispiel 3

Herstellung eines waschbaren Melamin-Harnstoff-Formaldehyd-Leimes:
1000 Teile eines handelsüblichen, wässrigen (formaldehydreichen) Harnstoff-Formaldehyd-Vorkondensats mit einem Molverhältnis (F:H) von 5 entsprechend 153 Teilen Harnstoff und 382 Teilen Formaldehyd werden bei pH 9 und 95°C mit 549 Teilen Melamin umgesetzt. Die erhaltene Lösung wird anschliessend mit 2027 Teilen eines nach Beispiel 1 erhaltenen Harnstoff-Formaldehyd-Kondensats vermischt.

Dieses und das folgende Beispiel zeigt, dass Waschbarkeit auch erzielt wird, wenn nur ein Teil der Harzlösung in der erfindungsgemässen Weise modifiziert wurde.

Beispiel 4

Herstellung eines waschbaren Melamin-Harnstoff-Phenol-Formaldehyd-Leimes:
1000 Teile einer 40%igen Formaldehyd-Lösung werden bei pH 10 und bei einer Temperatur von 95°C mit 560 Teilen Melamin und 160 Teilen Phenol umgesetzt. Anschliessend werden 1390 Teile eines nach Beispiel 1 hergestellten Harnstoff-Formaldehyd-Kondensats zugemischt.

Beispiel 5

a) Herstellung eines mit Polyacrylamid modifizierten Melamin-Harnstoff-Formaldehyd-Präkondensats:
1000 Teile des formaldehydreichen Harnstoff-Formaldehyd-Vorkondensats, wie in Beispiel 3 verwendet, werden bei pH 9 und einer Temperatur von 95°C mit 549 Teilen Melamin und 9 Teilen Polyacrylamid umgesetzt.

b) Herstellung des Leims:
Die erhaltene Lösung wird anschliessend mit 2027 Teilen eines wässrigen Harnstoff-Formaldehyd-Kondensats (M.V. 1,58, entsprechend 887 Teilen Harnstoff und 704 Teilen Formaldehyd), vermischt, das einem üblichen Holzleim entspricht.

Beispiel 6

Herstellung eines mit hydroxymethyliertem Polyacrylamid modifizierten Melamin-Harnstoff-Formaldehyd-Harzes:
In 1000 Teilen des in Beispiel 3 verwendeten Harnstoff-Formaldehyd-Vorkondensats werden bei pH 9 und einer Temperatur von 95°C mit 549 Teilen Melamin und 39 Teilen einer wässrigen Lösung des hydroxymethylierten Polyacrylamids umgesetzt. Die Lösung wird anschliessend mit 2027 Teilen eines wässrigen Kondensats aus 704 Teilen Formaldehyd und 887 Teilen Harnstoff (M.V. 1,6:1) vermischt.

Beispiel 7

Herstellung eines besonders weit kondensierten Harnstoffharz-Leimes:
1000 Teile eines 56%igen handelsüblichen, wässrigen Harnstoffharzleims mit einem M.V. von 2 enthaltend 400 Teile Formaldehyd und 160 Teile Harnstoff werden mit 350 Teilen einer 68%igen Harnstofflösung und 4 Teilen eines Copolymerisats aus 75 Gew.% Acrylamid und 25 Gew.% Hydroxypropylacrylat bei pH 8 und einer Temperatur von 80°C 30 Minuten umgesetzt. Danach wird mit Ameisensäure auf pH 4,8 eingestellt, 30 Minuten bei 95°C kondensiert und anschliessend mit Natronlauge neutralisiert. Bei 95°C werden weitere 320 Teile der 68%igen Harnstofflösung zugefügt und 10 Minuten umgesetzt. Die erhaltene Lösung wird abgekühlt und schliesslich mit 200 Teilen eines ebenfalls handelsüblichen Harnstoff-Formaldehyd-Vorkondensats entsprechend 100 Teilen Formaldehyd und 50 Teilen Harnstoff vermischt und auf übliche Konzentration eingeengt.

Sämtliche nach Beispiel 1 bis 7 erhaltenen, begrenzt wasserverdünnbaren Harze bilden bei stärkerer Verdünnung mit Wasser feinteilige wässrige Dispersionen, die sich pumpen, rühren, ausgiessen und jedenfalls praktisch vollständig aus Gefässen entleeren lassen.

Anwendungstechnische vergleichende Prüfungen:

a) 6 kg absolut trockene (atro) Fichtenholzspäne werden mit der jeweiligen Leimflotte besprüht. Man stellt eine Leimflotte her, jeweils aus 460 g 65%igen Leims, 4,5 g Ammoniumchlorid, 7 g 25%iger Ammoniaklösung sowie 128,5 g Wasser. Die beleimten Späne werden zu einer Matte geformt. Die weisen rechnerisch eine Feuchtigkeit von ca. 12% auf. Die Matte wird bei 170°C in 4,5 Minuten zu einer Platte verpresst, die bei einer Dicke von 18 mm ein spez. Gewicht von ca. 0,62 aufweist.

Die Platten haben nach DIN 53 260–265 folgende Eigenschaften:

| | Erfindungs-gemässes Harz Beispiel 1 | Herkömmliches Harz |
|---|---|---|
| Spez. Gewicht | 0,622 | 0,623 |
| Dicke [mm] | 18,3 | 18,2 |
| Biegefestigkeit [N/mm²] | 21,8 | 21,6 |
| Querzugfestigkeit V20 [N/mm²] | 0,68 | 0,60 |
| Dickenquellung nach 2 Std. [%] | 16,4 | 18,1 |
| Dickenquellung nach 24 Std. [%] | 21,5 | 24,3 |

b) 6 kg atro Holzspäne werden mit 1000 g einer Leimharzflotte beleimt, die aus 857 g eines 65%igen Melamin-Harnstoff-Phenol-Formaldehyd-Mischkondensats, 8,6 g Ammoniumchlorid, 13 g einer 25%igen Ammoniaklösung und 112 g Wasser besteht. Die Späne werden bei 170°C in 4,5 Minuten zu einer Platte verpresst.
Eigenschaften der Platten nach DIN 53 260–265.

| | Harz nach Beispiel 4 | Herkömmliches Mischkondensat mit gleichem Molverhältnis |
|---|---|---|
| Spez. Gewicht | 0,636 | 0,642 |
| Dicke [mm] | 17,7 | 17,6 |
| Biegefestigkeit [N/mm²] | 29,9 | 30,7 |
| Querzugfestigkeit V20 [N/mm²] | 1,35 | 1,12 |
| Querzugfestigkeit V100 [N/mm²] | 0,38 | 0,35 |
| Dickenquellung nach 2 Std. [%] | 9,8 | 9,9 |
| Dickenquellung nach 24 Std. [%] | 14,6 | 15,0 |

c) Herstellung waschbarer Tränkharzlösungen

Beispiel 8

In einem wie üblich ausgerüsteten Rührgefäss werden 950 g Melamin, 950 g 40%ige, unstabilisierte, wässrige Lösung von Formaldehyd und 343 g Trinkwasser sowie 17 g Caprolactam und 5 g einer 50%igen, wässrigen Polyacrylamidlösung (K-Wert=30; entsprechend 0,1% Polyacrylamid, bezogen auf Harzgehalt) mit 10%iger Kalilauge auf einen pH-Wert von 9,5 (30°C, Glaselektrode, korrigiert) eingestellt und anschliessend aufgeheizt. Dabei geht das Melamin in Lösung. Die Reaktion wird bei 96°C fortgeführt, wobei der pH-Wert langsam abfällt. Durch laufenden Zusatz von 10%iger Kalilauge wird der pH-Wert auf 8,7 gehalten. Beim Erreichen eines Trübungspunktes von 60°C wird der Zusatz von Lauge unterbrochen und auf 20°C abgekühlt. Man erhält eine wässrige Harzlösung mit folgenden Eigenschaften:

| | |
|---|---|
| Molverhältnis F/M | 1,68 |
| pH-Wert: | 9,9 |
| Trübungspunkt: | 62°C |
| Wasserverträglichkeit: | 1 : 1 |
| Dichte: | 1,260 g/cm³ |
| Viskosität: | 99 mPa.s |
| Trockengehalt: (Probe 2 h bei 120°C getrocknet) | 56,6 % |
| Lagerstabilität bei 20°C: | 44 Tage |

In weiteren Versuchen (8–1; 8–2; 8–4) wird entsprechend verfahren, jedoch der Zusatz an Polyacrylamid variiert. In Tabelle 1 sind die ermittelten Lagerstabilitäten aufgetragen.

Tabelle 1

| Beispiel | Zusatz an Polyacrylamid (ber. 100%ig) % bezogen auf Harzanteil | Lagerstabilität bei 20°C in Tagen |
|---|---|---|
| 8–1 | 0,025 | 49 |
| 8–2 | 0,05 | 44 |
| 8–3 | 0,1 | 44 |
| 8–4 | 0,25 | 29 |

Beispiele 9 bis 12

Die nachstehenden Lösungen von Acrylamid-Copolymerisaten wurden jeweils in einer Menge von 0,5% (Feststoffanteil, bezogen auf Feststoffanteil) bei der Herstellung eines Melaminharzes, entsprechend der Vorschrift des Beispiels 8, mitverwendet.

75% Acrylamid
25% Hydroxypropylacrylat
Feststoffgehalt: 24,5% in Wasser

50% Acrylamid
50% Hydroxypropylacrylat
Feststoffgehalt: 24,7% in Wasser

75% Acrylamid
35% Hydroxybutylacrylat
Feststoffgehalt: 13,9% in Wasser

50% Acrylamid
50% Vinylpyrrolidon
Feststoffgehalt: 22,6% in Wasser.

Alle so hergestellten Melaminharz-Zubereitungen liessen sich, ohne Rückstände zu hinterlassen, mit Wasser stark verdünnen und dann aus Gefässen ausgiessen. Sie wiesen bei anwendungstechnischer Prüfung (vgl. unten) keine Nachteile gegenüber einem Harz auf, das ohne Zusatz von Acrylamid-Polymeren hergestellt war.

Beispiel 13

Ein für die Niederdruckbeschichtung von Spanplatten geeignetes Harz wird folgendermassen hergestellt:

Analog zu Beispiel 8 werden 973 g Melamin, 956 g 40%ige wässrige Formaldehydlösung, 446 g Trinkwasser und 6,8 g Polyacrylamid (40%ig, K-Wert 15) gemischt und mit 10%iger Kalilauge auf einen pH-Wert von 9,0 eingestellt und die zur Herstellung von Niederdruckharzen üblichen Mittel zur Fliessverbesserung zugesetzt. Nach Aufheizen bis 96°C wird die Kondensation ohne pH-Wert-Korrektur bis zu einem Trübungspunkt von 59°C fortgesetzt. Der abgekühlten MF-Harzlösung können weitere übliche Modifizierungsmittel zugesetzt werden. Man erhält eine MF-Tränkharzlösung mit folgenden Eigenschaften bei 20°C:

| | |
|---|---|
| Molverhältnis M/F: | 1,65 |
| pH-Wert: | 10,0 |
| Trübungspunkt: | 59°C |
| Dichte: | 1:1,15 |
| Viskosität: | 56 mPa.s |
| Trockengehalt: | 56,0% |
| Lagerstabilität: | 32 Tage |

In weiteren Versuchen (9-0; 9-2) wird entsprechend verfahren, jedoch einmal der Zusatz an Acrylamid unterlassen und einmal ein Gehalt an Polyacrylamid von 0,6% vorgeben. In Tabelle 2 sind die ermittelten Lagerstabilitäten aufgetragen.

Tabelle 2

| Beispiel | Zusatz an Polyacrylamid (ber. 100 %) % bezogen auf Harzanteil | Lagerstabilität bei 20°C in Tagen |
|---|---|---|
| 9-0 | 0 (Vergleich) | 32 |
| 9-1 | 0,2 | 32 |
| 9-2 | 0,6 | 29 |

Beispiel 14

Ein für die Hochdruckbeschichtung von Schichtpressstoffen und als Spanplattenbindemittel geeignetes Harz erhält man, wenn man verfährt wie in Beispiel 2 beschrieben, jedoch auf den Zusatz von Fliessverbesserern verzichtet.

Es wird eine MF-Harzlösung mit folgenden Eigenschaften bei 20°C erhalten:

| | |
|---|---|
| Molverhältnis F/M: | 1,65 |
| pH-Wert: | 10,2 |
| Trübungspunkt: | 62°C |
| Wasserverträglichkeit: | 1 : 0,9 |
| Dichte: | 1,2480 g/cm³ |
| Viskosität: | 63 mPa.s |

| | |
|---|---|
| Trockengehalt: | 54,4% |
| Lagerstabilität: | 16 Tage |

Wiederum werden Harze mit unterschiedlichem Polyacrylamid-Anteil hergestellt. In Tabelle 3 sind die ermittelten Lagerstabilitäten aufgetragen:

Tabelle 3

| Beispiel | Zusatz an Polyacrylamid (ber. 100 %) % bezogen auf Harzanteil | Lagerstabilität bei 20°C in Tagen |
|---|---|---|
| 10-0 | 0 (Vergleich) | 28 |
| 10-1 | 0,2 | 27 |
| 10-2 | 1,0 | 27 |
| 10-3 | 2,0 | 11 |

Beispiel 15

Ein entsprechend der DE-PS 1 595 368 modifiziertes Harz mit einem besonders hohen Molverhältnis von 1,87 erhält man wie folgt:

947 g Formaldehyd, 40%ig, 374 g Wasser, 850 g Melamin und 62 g Caprolactam werden gemischt und mit 10%iger Kalilauge auf pH=9,5 eingestellt. Anschliessend werden 7,4 g methyloliertes Polyacrylamid, 35%ig (Herstellvorschrift s.o.) zugesetzt und auf 96°C erhitzt. Man hält auf dieser Temperatur und setzt kontinuierlich 10%ige Kalilauge zur Einhaltung eines pH-Wertes von 8,7 zu. Beim Erreichen eines Trübungspunktes von 55°C wird die Kondensation unterbrochen, wobei rasch auf Raumtemperatur abgekühlt wird. Während des Abkühlens werden beginnend bei 75° 37 g technisches Toluolsulfonamid eingerührt.

Die Harzlösung hatte bei 20°C folgende Eigenschaften (zwei verschiedene Versuche):

| | 11-1 | 11-2 |
|---|---|---|
| pH-Wert | 9,65 | 9,5 |
| Wasserverträglichkeit | 1:1,0 | 1:0,8 |
| Dichte (g/cm³) | 1,240 | 1,240 |
| Viskosität (mPa.s) | 85 | 85 |
| Trockengehalt (%) (120°C/2 h) | 56,5 | 55,8 |

Anwendungstechnische Prüfung

1. Prüfung des Ausfällungsverhaltens (Waschbarkeit)

Ein mit Harzlösung gefüllter 100-ml-Kunststoffbecher wird geleert. Dem im Becher am Boden und an den Wandungen verbleibenden Rest werden 25 ml 35°C warmes Wasser zugefügt. Man schüttelt 30 Sekunden, dann wird der Inhalt des Bechers ausgeschüttet. Noch einmal wird mit warmem Wasser nachgespült. Die «Waschbarkeit» wird als «gut» beurteilt, wenn nichts mehr oder fast nichts mehr von dem ausgefallenen Harz an den Wandungen oder dem Boden verschmiert zurückbleibt.

Tabelle 4 zeigt das Ergebnis dieser Prüfung an den in den Beispielen 8 bis 11 hergestellten Tränkharzen.

| Harz gemäss Beispiel | Waschbarkeit | | Harzflotte | (Harz+ Härter) |
|---|---|---|---|---|
| | Harz sofort | nach 3 Wochen | sofort | nach 6 h |
| 8–1 | gut | gut | gut | gut |
| 8–2 | gut | gut | gut | gut |
| 8–3 | gut | gut | gut | gut |
| 8–4 | gut | gut | gut | gut |
| 9–0 | schlecht | schlecht | schlecht | schlecht |
| 9–1 | noch gut | noch gut | noch gut | noch gut |
| 9–2 | gut | gut | gut | gut |
| 10–0 | schlecht | schlecht | schlecht | schlecht |
| 10–1 | gut | gut | gut | gut |
| 10–2 | gut | gut | gut | gut |
| 10–3 | gut | gut | gut | gut |
| 11–1 | gut | gut | gut | gut |
| 11–2 | gut | gut | gut | gut |

2. Oberflächenqualität beschichteter Spanplatten

Harzproben aus Beispiel 9 werden mit Härtungsbeschleuniger auf eine Trübungszeit von 4½ Minuten bei 100°C eingestellt. Mit diesen Ansätzen wird ein weisses und ein farbiges Dekorpapier von 100 g/m² so imprägniert, dass ein Harzauftrag von 140% (bezogen auf Papiergewicht) bei einem Anteil an flüchtigen Bestandteilen von 6,5% (gemessen nach 5 Minuten bei 160°C) erhalten wird. Die erhaltenen Filme werden während 50 s bei 190°C mit 2 N/mm² auf Spanplatten aufgepresst.

Die Auswertung der Oberflächenprüfung zeigt Tabelle 5:

| Probe | Polyacryl-amidzusatz % b.a. Harzanteil | Farbliche Änderung bei dunklem Dekor | Rissbildung 15 h bei 80° C | Glanz/Oberflächenruhe | Geschlossenheit (Graphittest) | Zigaretten-test (DIN 53799) | Wasser-dampf (DIN 53799) |
|---|---|---|---|---|---|---|---|
| 9–0 | ohne | keine | keine | gut | gut | erfüllt | erfüllt |
| 9–2 | 0,2 | keine | keine | gut | gut | erfüllt | erfüllt |
| 9–3 | 0,6 | keine | keine | gut | gut | erfüllt | erfüllt |

Die anwendungstechnische Prüfung zeigt, dass Polyacrylamid bei erfindungsgemässer Verwendung keinen negativen Einfluss auf die Qualität der Melaminharzoberfläche ausübt.

## Patentanspruch

Verfahren zur Herstellung von wässrigen Lösungen von Aminoplastharzen durch Kondensation von Harnstoff und/oder Melamin und gegebenenfalls Phenol mit Formaldehyd in einer oder mehreren Stufen, wobei schliesslich beschränkt wasserverträgliche Harze gebildet werden, dadurch gekennzeichnet, dass man vor oder während der Kondensation, jedenfalls aber, solange noch freier Harnstoff bzw. Melamin oder deren Vorkondensate anwesend sind, ein wasserlösliches, mehr als 30 Mol% einpolymerisierte Einheiten des Acrylamids, Methacrylamids oder deren N-Methylolverbindungen enthaltendes Polymerisat mit einem K-Wert von etwa 20 bis 60 bzw. einem gewichtsgemittelten Molekulargewicht $M_w$ von etwa 5000 bis 50 000 in einer Menge von unter 5 Gew.-%, bezogen auf die in der Lösung gebildete Harzmenge zusetzt.

## Claim

A process for the production of aqueous solutions of amino resins by condensing urea and/or melamine and, if desired, phenol with formaldehyde in one or more stages, resins having limited water compatibility being finally obtained, wherein less than 5% by weight, based on the amount of resin formed in the solution, of a water-soluble polymer having a K value of about 20 to 60, i.e. a weight-average molecular weight $M_w$ of about 5,000 to 50,000, and containing more than 30 mole percent of polymerized units of acrylamide or methacrylamide or N-methylol compounds thereof.

## Revendication

Procédé pour la préparation de solutions aqueuses de résines aminoplastes par condensation d'urée et/ou de mélamine et, le cas échéant, de phénol avec l'aldéhyde formique en un ou plusieurs temps, ce qui donne finalement des résines dont la compatibilité avec l'eau est limitée, caractérisé en ce qu'avant ou pendant la condensation, mais de toute façon tant que de l'urée ou de la mélamine libre ou des produits de précondensation de ces substances sont encore présents, on ajoute un polymère hydrosoluble contenant plus de 30 mol% d'unités en liaison polymère de l'acrylamide, du méthacrylamide ou de leurs composés N-méthylolés, polymère qui présente une valeur K d'environ 20 à 60 ou un poids moléculaire moyen $M_w$ d'environ 5000 à 50 000, dans une proportion de moins de 5% en poids sur la base de la quantité de résine formée dans la solution.